# EUROPEAN PATENT APPLICATION

(11) **EP 2 223 902 A2**
(43) Date of publication of application: **01.09.2010**
(21) Application number: 10153214.1
(22) Date of filing: 10.02.2010
(51) Int. Cl.: C04B 16/06, C04B 28/02, C04B 111/28

(54) **Fire-resistant concrete with high impact resistance**

(30) Priority: 27.02.2009 KR 20090017275
(71) Applicant: Daewoo Engineering&Construction Co., Ltd, Seoul 110-713 (KR); Cheongju University Industry&Academy Cooperation Foundation, Chungbuk 360-764 (KR); Doosan Construction&Engineering Co., Ltd., Gangnam-gu Seoul 135-714 (KR); Hudigm Architects & Engineers Co., Ltd., Gyeongsanbuk-do 760-905 (KR)
(72) Inventor: Han, Cheon Goo, 360-764 Chungbuk (KR); Yang, Seong Hwan, 360-764 Chungbuk (KR); Han, Min Cheol, 360-764 Chungbuk (KR); Pei, Chang Chum, 360-764 Chungbuk (KR); Heo, Young Sun, 360-764 Chungbuk (KR); Song, Yong Won, 360-764, Chungbuk (KR); Kim, Seong Woon, 137-060 Seoul (KR); Lee, Seong Yeun, 135-010 Seoul (KR); Jee, Suk Won, 135-010 Seoul (KR); LEE, Bo Hyeong, 135-010 Seoul (KR); Kim, Jung Gil, 135-010 Gangnam-gu Seoul (KR); Hann, Chang Pyung, 760-905 Gyeongsangbuk-do (KR); JIN, Hu Lin, 760-905 Gyeongsangbuk-do (KR)
(74) Representative: Delorme, Nicolas

(57) **Abstract**

Disclosed is a fire-resistant high performance concrete. This concrete has high impact resistance and includes organic fibers as well as cement, sand, pebbles, water and admixture materials, wherein the organic fibers consist of a relatively high melting point fiber, which is a nylon fiber, and a relatively low melting point fiber, which is a polypropylene fiber, and the low melting point fiber has 1 to 440 times the cross-sectional area and 0.5 to 576 times the volume fraction of the high melting point fiber. Accordingly, the low melting point fiber is first fused in the concrete at a fire outbreak to form an exhaust path for water vapor, and the high melting point fiber is later fused in the concrete by increase in temperature during progress of the fire which in turn forms another exhaust path for the residual water vapor, so that the concrete exhibits excellent spalling prevention effects even when a small amount of fibers is added to the concrete.

## Description

### BACKGROUND OF THE INVENTION

### 1. Field of the Invention

The present invention relates to a fire-resistant concrete with high impact resistance and, more particularly, to a fire-resistant concrete with high impact resistance prepared by adding organic fibers to a concrete material, so as to reduce inconvenience in admixing concrete, solve a cost increase problem, and effectively preventing explosive spalling thereof.

### 2. Description of the Related Art

In general, cement materials such as concrete used in constructing a tunnel, an underground structure, etc. require high strength and/or toughness and steel fiber-reinforced concrete having high toughness is currently used in various applications. However, such steel fiber-reinforced concrete does not sufficiently inhibit fine cracks as a significant cause in deterioration of durability of the concrete.

Although fine cracks do not initially affect structural performance of a concrete, they may cause increase in water permeability which in turn induces corrosion of steel fibers and promotes structural deterioration when subjected to repeated freezing and thawing.

Additionally, in order to dramatically reduce fire damage of concrete, a concrete material with desired fire-resistant performance is required. Therefore, research and applications have tried to meet the above requirements.

For instance, International Unexamined Patent Publication No. WO/99/28267 discloses an ultra-high performance concrete containing metal fiber. However, the metal fiber negatively affects fire resistance performance due to high electrical conductivity thereof, causing a concrete spalling problem in the event of a fire, even though it advantageously influences improvement in structural performance of the concrete.

In addition, Korean Unexamined Patent Publication No. 2006-0086110 discloses a concrete material including steel fiber as well as organic fiber having desired length and diameter, at least one of which is different from that of the steel fiber, wherein the concrete material has a compressive strength of up to 100MPa and a flexural strength of up to 10MPa. However, such a cement material encounters a problem of high cost in spite of favorable flexural strength and/or flexural toughness.

### SUMMARY OF THE INVENTION

Therefore, the present invention is directed to solving the above problems and it is an object of the present invention to provide a fire-resistant concrete with high impact resistance (often referred to as "fire-resistant high performance concrete") capable of preventing spalling of a building in the event of a fire while being economically feasible to manufacture the same, wherein fibers with relatively low melting point are initially fused in the concrete to form an exhaust path for water vapor, other fibers with relatively high melting point are fused by increase in temperature during progress of the fire which in turn form another exhaust path for the residual water vapor, thereby exhibiting excellent spalling prevention effects even when a small amount of fibers is added to the concrete.

In order to accomplish the above purpose, the present invention provides a fire-resistant high performance concrete including organic fibers as well as cement, sand, pebbles, water and admixture materials, wherein the organic fibers include a high melting point fiber and a low melting point fiber, and the low melting point fiber has 1 to 144 times the cross-sectional area and 0.5 to 576 times the volume fraction of the high melting point fiber.

According to an exemplary embodiment of the present invention, the low melting point fiber may be a polypropylene fiber and the high melting point fiber may be a nylon fiber.

According to another exemplary embodiment of the present invention, the polypropylene fiber may have a diameter of 20 to 60µm and a length of 10 to 20mm and the nylon fiber may have a diameter of 5 to 20µm and a length of 5 to 20mm.

According to another exemplary embodiment of the present invention, an amount of the used organic fibers may range from 0.03 to 0.2 vol.% to a total volume of the fire-resistant concrete.

According to a still further embodiment of the present invention, a relative volume ratio of the polypropylene fiber to the nylon fiber may range from 1:9 to 9:1.

As described above, a fire-resistant high performance concrete according to the present invention is **characterized in that** a relatively low melting point fiber is first fused in the concrete to form an exhaust path for water vapor in the event of fire, and then, a relatively high melting point fiber is fused in the concrete during progress of the fire which in turn forms another exhaust path for the residual water vapor. Therefore, the inventive concrete exhibits excellent spalling prevention effects even when a small amount of fibers is added to the concrete, thereby attaining economical advantages with reduction of material costs. Moreover, fluidity of a final concrete product may be ensured to improve workability thereof.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a cross-sectional view illustrating a column fabricated using a fire-resistant high performance concrete according to the present invention;
FIG. 2 shows a standard heating curve according to KS F 2257-1;
FIG. 3 shows a temperature history curve of a fire-resistant high performance concrete prepared in Example 1 according to the present invention;
FIG. 4 shows a temperature history curve of another fire-resistant high performance concrete prepared in Example 2 according to the present invention;
FIG. 5 is photographs of front, rear, left and right sides of a fire-resistant high performance concrete structure fabricated in Example 1, which were taken after fire resistance experimentation;
FIG. 6 is photographs of front, rear, left and right sides of another fire-resistant high performance concrete structure fabricated in Example 2, which were taken after fire resistance experimentation; and
FIG. 7 is a test report of the fire-resistant high performance concretes prepared in Examples 1 and 2 according to the present invention, which was issued by Korea Institute of Construction Technology (KICT).

### DETAILED DESCRIPTION OF THE PREFERRED EMBODIMENTS

Hereinafter, the present invention will be described in detail.

When a fire occurs in a high-rise building, it is difficult to discharge water vapor generated inside the building since concrete mainly used for the building has a compact internal texture. In this case, when a pressure of the water vapor entrapped in the internal texture of the concrete exceeds a constant upper limit, the concrete is explosively broken and scattered.

In order to solve the above problem, there is an approach wherein water vapor present in concrete is rapidly output via a large path formed by fusing a specific organic fiber and the residual water vapor entrapped in a fine texture of the concrete is further completely exhausted via a relatively small path formed by fusing another specific organic fiber, thereby effectively preventing spalling of the concrete in the event of a fire.

A fire-resistant high performance concrete according to the present invention comprises organic fibers as well as cement, sand, pebbles, water and admixture materials wherein the organic fibers consist of a relatively high melting point fiber and a relatively low melting point fiber, and the low melting point fiber has 1 to 144 times the cross-sectional area and 0.5 to 576 times the volume fraction of the high melting point fiber.

Here, the admixture materials mean eco-friendly materials used in constructing high-rise buildings, which include, for example, fly-ash, blast furnace slag powder, silica-fume, etc.

The organic fibers comprise both fibers with relatively high melting point and low melting point. When a fire occurs in a building, an internal temperature of concrete of the building is elevated to initially melt the low melting point fiber and generate voids, through which water vapor is discharged.

During progress of the fire, the internal temperature of the concrete continuously increases to further melt the high melting point fiber which in turns forms a path through which the residual water vapor entrapped in a fine texture of the concrete is exhausted.

Such a low melting point fiber may be a polypropylene fiber which has a density of 0.91 g/cm2, a melting point of 160°C and a tensile strength of 560 MPa.

Also, the high melting point fiber may be a nylon fiber which has a density of 1.15g/cm2, a melting point of 220°C and a tensile strength of 918 MPa.

In this regard, the polypropylene fiber has 1 to 144 times the cross-sectional area of the nylon fiber and, in addition, 0.5 to 576 times the volume fraction of the same. If the cross-sectional area or the volume fraction is below a lower limit, the low melting point fiber contained in the concrete may not be fused and may cause difficulties in formation of a path for smoothly passing water vapor when a fire occurs in a high-rise building constructed using high performance concrete and raises an internal temperature of the concrete. On the other hand, if the cross-sectional area or the volume fraction exceeds an upper limit, some problems such as quality deterioration caused by decrease in fluidity, construction delay caused by blockage of a forced pump, and the like are encountered, although water vapor successfully passes through the path when an internal temperature of concrete increases to melt the low melting point fiber upon occurrence of a fire. As a result, difficulties in construction of high-rise buildings may be caused.

The polypropylene fiber may have a diameter of 20 to 60µm and a length of 10 to 20mm. Likewise, the nylon fiber may have a diameter of 5 to 20µm and a length of 5 to 20mm. If a diameter or length of each of the polypropylene fiber and the nylon fiber is below a lower limit, the low melting point fiber contained in concrete may not be fused and may cause difficulties in formation of a path for smoothly passing water vapor when a fire occurs in a high-rise building constructed using high performance concrete and raises an internal temperature of the concrete. On the other hand, if the cross-sectional area or the volume fraction exceeds an upper limit, some problems such as quality deterioration caused by decrease in fluidity, construction delay caused by blockage of a forced pump, and the like are encountered, although water vapor successfully passes through the path when an internal temperature of concrete increases to melt the low melting point fiber upon occurrence of a fire. As a result, difficulties in construction of high-rise buildings may be caused.

Moreover, an amount of the organic fibers may range from 0.03 to 0.2 vol.% to a total volume of the fire-resistant high performance concrete according to the present invention. If the amount of the organic fibers is below 0.03 vol.%, spalling prevention effects may be minimal. On the other hand, when the amount of the organic fiber exceeds 0.2 vol.%, difficulties in construction as described above may be caused.

In addition, a relative volume ratio of the polypropylene fiber to the nylon fiber used in the concrete may range from 1:9 to 9:1. If the relative volume ratio is less than 1:9, raw material costs may be increased. On the other hand, if the relative volume ratio is more than 9:1, effects of adding the nylon fiber to the concrete may be minimal, which in turn requires increase in content of composite fibers required for ensuring desired fire resistance of the concrete.

Hereinafter, a detailed description will be given of constructional functions and advantages of the present invention with reference to the following examples and experimental example.

### EXAMPLE 1

448kg/m3 of cement, 128kg/m3 of fly-ash, 64kg/m3 of silica fume, 128kg/m3 of blast furnace slag powder, 660kg/m3 of sand and 810kg/m3 of pebbles were prepared as a concrete mixture. A polypropylene fiber having a density of 0.91 g/cm2, a melting point of 160°C and a tensile strength of 560MPa as a low melting point fiber and a nylon fiber having a density of 1.15g/cm2, a melting point of 220°C and a tensile strength of 918MPa as a high melting point fiber, wherein the polypropylene fiber has 11 times the cross-sectional area and 21 times the volume fraction of the nylon fiber, were added to the foregoing prepared concrete mixture in an amount of 0.05 vol.% relative to a total volume of a final product, that is, a fire-resistant high performance concrete. As a result, the fire-resistant high performance concrete according to the present invention was obtained.

### EXAMPLE 2

Another fire-resistant high performance concrete according to the present invention was obtained by the same procedure as described in Example 1, except that an overall amount of the polypropylene fiber and the nylon fiber was 0.075 vol.% relative to the total volume of the fire-resistant high performance concrete.

### EXPERIMENTAL EXAMPLE

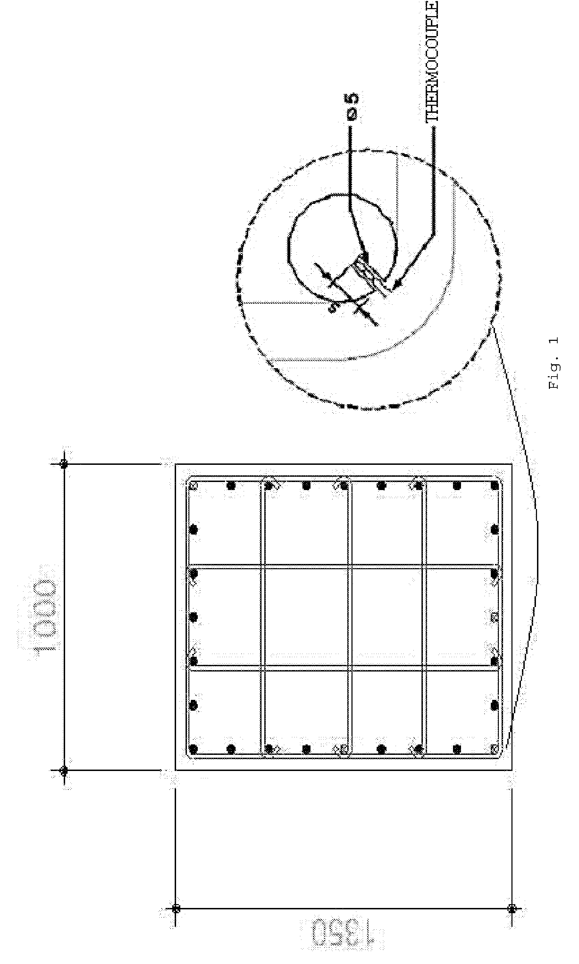

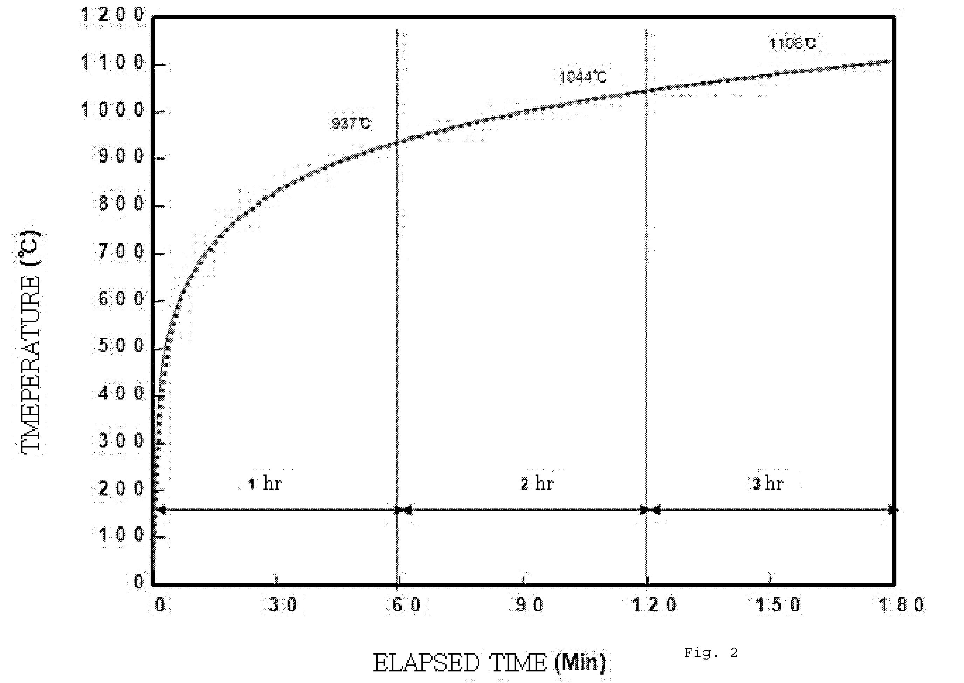

According to "Standards for management of fire resistance of high strength concrete column and beam" published by MLTM (The Ministry of Land, Transport and Maritime Affairs), a fire-resistant high performance concrete structure having a thermocouple therein was prepared as shown in FIG. 1. The concrete structure was heated on the basis of a standard heating curve according to KS F 2257-1 (see FIG. 2).

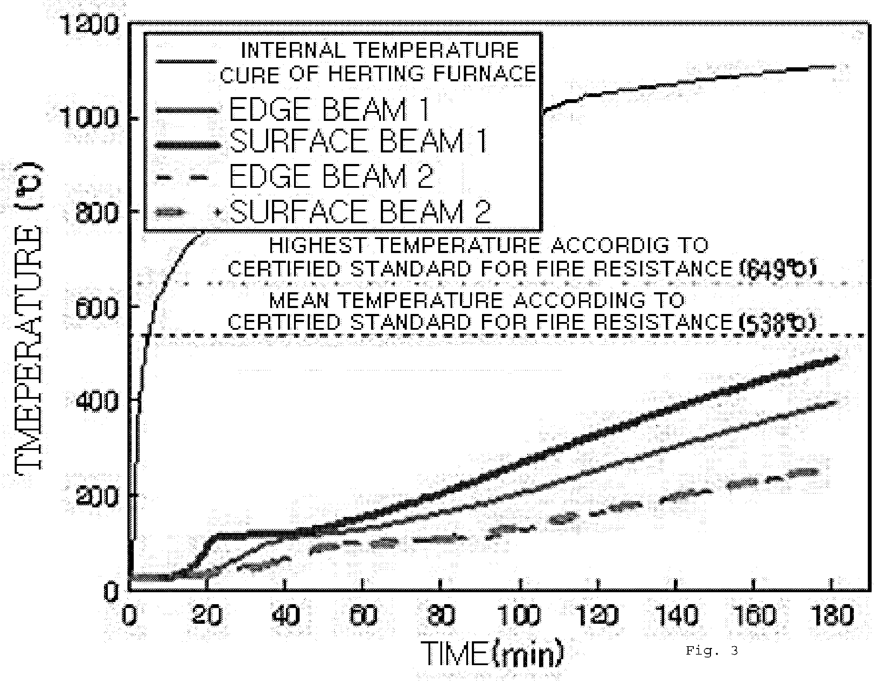

A temperature history curve of the fire-resistant high concrete prepared in Example 1 is shown in FIG. 3. That is, FIG. 3 illustrates a temperature history curve of a fire-resistant high performance concrete according to the present invention. This curve was plotted below a curve at 538°C which is a mean temperature according to standards certified for fire resistance. From this result, it is expected that spalling of the concrete upon occurrence of a fire may be effectively prevented.

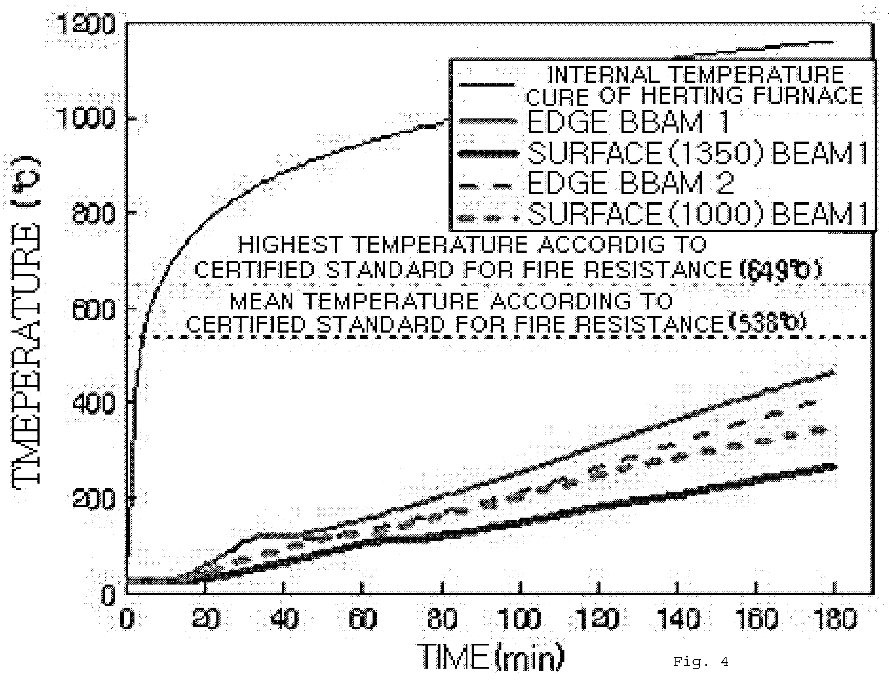

Additionally, FIG. 4 illustrates another temperature history curve of the fire-resistant high performance concrete prepared in Example 2. As described above in Example 1, it can be seen from the result that using the concrete in Example 2 may prevent spalling of the concrete upon occurrence of a fire.

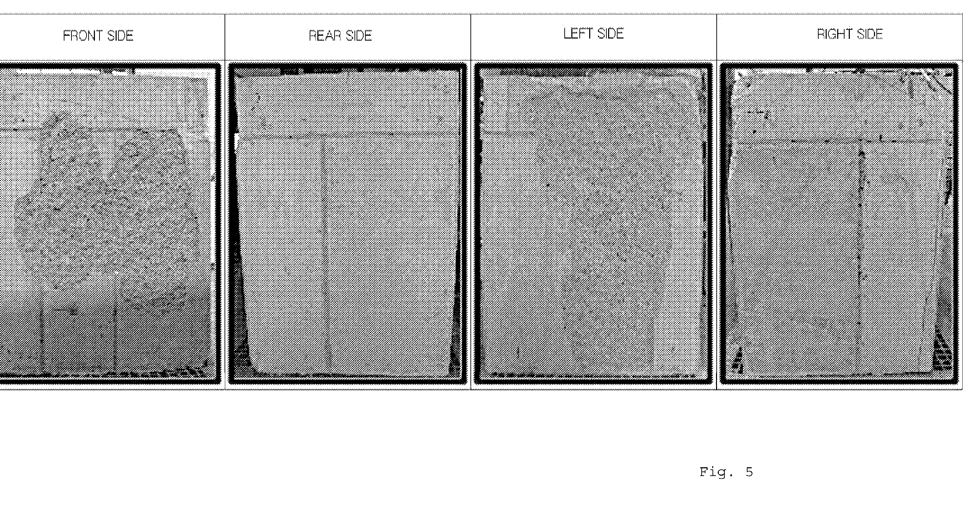

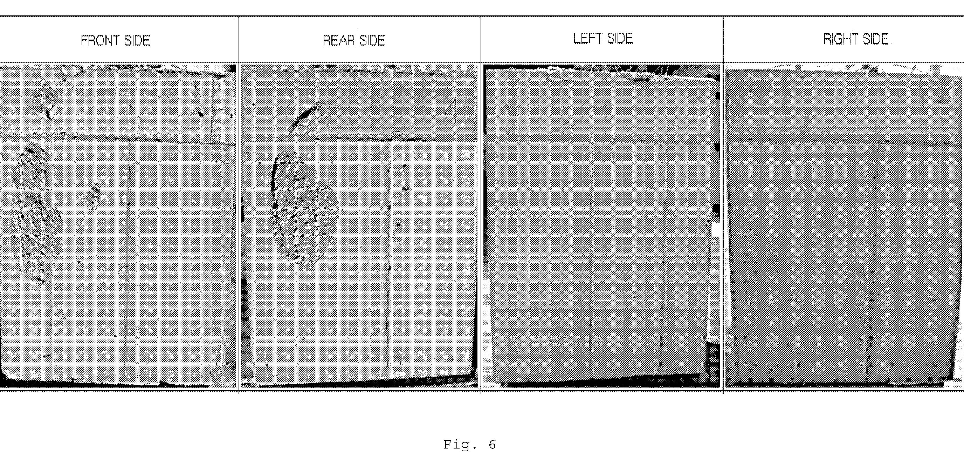

Furthermore, each of FIGS. 5 and 6 illustrates photographs of front, rear, left and right sides of each of the fire-resistant high performance concrete structures fabricated in Examples 1 and 2, respectively, which were taken after fire resistance experimentation. From the results, it can be seen that both the concrete structures show favorable appearances. Accordingly, it is easily expected that these concrete structures exhibit excellent spalling prevention effects.

Lastly, FIG. 7 is a test report of the fire-resistant high performance concretes prepared in Examples 1 and 2 according to the present invention. According to the test report, it is understood that a fire-resistant high performance concrete of the present invention has excellent heat resistance.

Although exemplary embodiments of the present invention has been disclosed for illustrative purposes, those skilled in the art will appreciate that various modifications, additions and substitutions are possible, without departing from the scope and spirit of the invention as disclosed in the appended claims.

## Claims

1. A fire-resistant concrete with high impact resistance, comprising:
organic fibers as well as cement, sand, pebbles, water and admixture materials, wherein the organic fibers include a high melting point fiber and a low melting point fiber, and the low melting point fiber has 1 to 144 times a cross-sectional area and 0.5 to 576 times a volume fraction of the high melting point fiber, and
wherein the low melting point fiber is a polypropylene fiber while the high melting point fiber is a nylon fiber, and a relative volume ratio of the polypropylene fiber to the nylon fiber ranges from 1:9 to 9:1.

2. The concrete according to claim 1, wherein the polypropylene fiber has a diameter of 20 to 60µm and a length of 10 to 20mm, while the nylon fiber has a diameter of 5 to 20µm and a length of 5 to 20mm.

3. The concrete according to claim 1 or 2, wherein an amount of the organic fibers ranges from 0.03 to 0.2 vol.% to a total volume of the concrete.
